# EUROPEAN PATENT APPLICATION

(11) **EP 3 573 035 A1**
(43) Date of publication of application: **27.11.2019**
(21) Application number: 17892862.8
(22) Date of filing: 20.01.2017
(51) Int. Cl.: G08G 1/16

(54) **VEHICLE BEHAVIOR PREDICTION METHOD AND VEHICLE BEHAVIOR PREDICTION APPARATUS**

(71) Applicant: Nissan Motor Co., Ltd., Yokohama-shi, Kanagawa 221-0023 (JP)
(72) Inventor: FANG Fang, Atsugi-shi Kanagawa 243-0123 (JP); NANRI Takuya, Atsugi-shi Kanagawa 243-0123 (JP)
(74) Representative: Grünecker Patent- und Rechtsanwälte PartG mbB
(86) International application number: PCT/JP2017/001962
(87) International publication number: WO 2018/134973

(57) **Abstract**

A vehicle behavior prediction apparatus 1 includes: an object detection unit 10 that detects the position of a target vehicle around a host vehicle; and a controller 40 that acquires road structure around the position of the target vehicle including at least a traffic lane. The controller 40 acquires a traffic rule for the road structure and predicts a route on which the target vehicle will travel, based on the acquired traffic rule.

## Description

### TECHNICAL FIELD

The present invention relates to vehicle behavior prediction methods and vehicle behavior prediction apparatuses.

### BACKGROUND ART

There have been conventionally known driving assistance apparatuses for detecting information on target vehicles to assist drivers (Patent Literature 1). A driving assistance apparatus according to Patent Literature 1 predicts the traffic lane on which a target vehicle will travel, based on detected travel histories of the target vehicle and determines the possibility of a collision between the host vehicle and the target vehicle.

### CITATION LIST

### PATENT LITERATURE

Patent Literature 1: Japanese Patent Application Publication No. 2013-134567

### SUMMARY OF INVENTION

### TECHNICAL PROBLEM

Unfortunately, the driving assistance apparatus according to Patent Literature 1 does not assume the case where the vehicle speed of the target vehicle is low. Since it is sometimes difficult to acquire information, such as the orientation and the travel histories, from the target vehicle moving at a low speed, there is a risk that the traffic lane on which the target vehicle will travel cannot be detected.

The present invention has been made in light of the above problem, and an object thereof is to provide a vehicle behavior prediction method and vehicle behavior prediction apparatus that provides improved accuracy in predicting the route on which a target vehicle will travel even when the target vehicle is moving at a low speed, and it is difficult to acquire the orientation and travel histories of the target vehicle.

### SOLUTION TO PROBLEM

A vehicle behavior prediction method according to an aspect of the present invention includes: detecting the position of a target vehicle around the host vehicle, acquiring road structure around the position of the target vehicle, including at least a traffic lane; acquiring a traffic rule for the road structure; and predicting a route on which the target vehicle will travel, based on the traffic rule.

### ADVANTAGEOUS EFFECTS OF INVENTION

The present invention improves accuracy in predicting the route on which a target vehicle will travel even when it is difficult to detect the orientation and travel histories of the target vehicle.

### BRIEF DESCRIPTION OF DRAWINGS

[Fig. 1] Fig. 1 is a configuration diagram of a vehicle behavior prediction apparatus according to a first embodiment of the present invention.
[Fig. 2] Fig. 2 is a diagram for explaining an operation example of the vehicle behavior prediction apparatus according to the first embodiment of the present invention.
[Fig. 3] Fig. 3 is a flowchart for explaining the operation example of the vehicle behavior prediction apparatus according to the first embodiment of the present invention.
[Fig. 4] Fig. 4 is a configuration diagram of a vehicle behavior prediction apparatus according to a second embodiment of the present invention.
[Fig. 5] Fig. 5 is a diagram for explaining areas of an intersection, according to the second embodiment of the present invention.
[Fig. 6] Fig. 6 is a diagram for explaining an operation example of the vehicle behavior prediction apparatus according to the second embodiment of the present invention.
[Fig. 7] Fig. 7 is a diagram for explaining another operation example of the vehicle behavior prediction apparatus according to the second embodiment of the present invention.
[Fig. 8] Fig. 8 is a diagram for explaining another operation example of the vehicle behavior prediction apparatus according to the second embodiment of the present invention.
[Fig. 9] Fig. 9 is a diagram for explaining another operation example of the vehicle behavior prediction apparatus according to the second embodiment of the present invention.
[Fig. 10] Fig. 10 is a table showing narrowing-down results according to the second embodiment the present invention.
[Fig. 11] Fig. 11 is a table showing narrowing-down results according to the second embodiment the present invention.
[Fig. 12] Fig. 12 is a diagram for explaining another operation example of the vehicle behavior prediction apparatus according to the second embodiment of the present invention.
[Fig. 13] Fig. 13 is a diagram for explaining another operation example of the vehicle behavior prediction apparatus according to the second embodiment of the present invention.
[Fig. 14] Fig. 14 is a flowchart for explaining an operation example of the vehicle behavior prediction apparatus according to the second embodiment of the present invention.
[Fig. 15] Fig. 15 is a flowchart for explaining the operation example of the vehicle behavior prediction apparatus according to the second embodiment of the present invention.
[Fig. 16] Fig. 16 is a flowchart for explaining the operation example of the vehicle behavior prediction apparatus according to the second embodiment of the present invention.
[Fig. 17] Fig. 17 is a diagram for explaining an operation example of a vehicle behavior prediction apparatus according to another embodiment of the present invention.

### DESCRIPTION OF EMBODIMENTS

Hereinafter, embodiments of the present invention will be described with reference to the drawings. In the description of the drawings, the same constituents are denoted by the same reference signs, and description thereof is omitted.

### [First Embodiment]

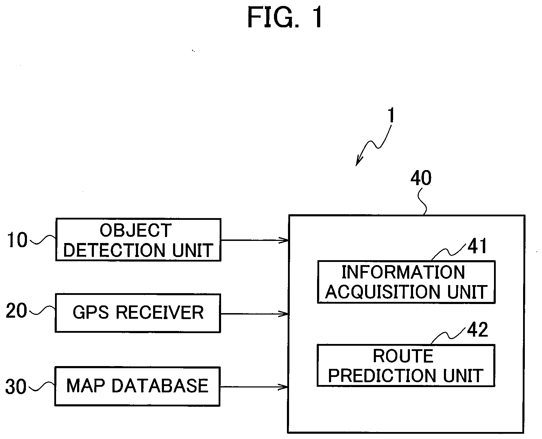

With reference to Fig. 1, a vehicle behavior prediction apparatus 1 according to a first embodiment will be described. As illustrated in Fig. 1, the vehicle behavior prediction apparatus 1 includes an object detection unit 10, GPS receiver 20, map database 30, and controller 40.

The object detection unit 10 is a sensor disposed in a host vehicle for detecting objects (pedestrians, bicycles, motorcycles, and other vehicles) around the host vehicle. This unit is used to acquire information on the objects, such as the speeds and positions of the objects around the host vehicle. Description in the first embodiment will be based on the assumption that the object detection unit 10 is a laser range finder. A laser range finder is a sensor to detect the distance and angle between the host vehicle and objects by scanning laser light within a certain angle range, receiving the reflection light at that time, and detecting the time difference between the laser emission time and the reflection-light reception time. The laser range finder also detects relative positions and relative distances of objects with respect to the host vehicle. The object detection unit 10 outputs detected information to the controller 40. Note that the object detection unit 10 is not limited to a laser range finder but may be a millimeter wave radar, an ultrasonic sensor, or another sensor.

The GPS receiver 20 detects the current position of the host vehicle by receiving radio waves from satellites. The GPS receiver 20 outputs the detected current position of the host vehicle to the controller 40.

The map database 30 stores various kinds of data to be necessary for route guidance, such as road information and facility information. The road information includes data on road structure. The data on road structure is data on intersections, the number of traffic lanes of roads, road width information, left-turn-only lanes or right-turn-only lanes, traffic signals, crosswalks, pedestrian overpasses, and others.

The map database 30 also stores traffic rules concerning road structures. The traffic rules mean, for example, rules set forth in the law, such as the rule that a vehicle must obey the traffic signal facing the traffic lane on which it is traveling. The traffic rules also include rules such as that when the signal is red, a vehicle must not travel past the stop position. In addition, the traffic rules include rules indicated by traffic signs, such as stop sign, speed limit, one-way traffic, no entry, no turning, and others. Note that the road information, traffic rules, and traffic signs are not limited to what is acquired from the map database 30, but those may be acquired by sensors provided in host-vehicle M1 or may be acquired using inter-vehicle communication or road-vehicle communication.

The map database 30 outputs the road information and the traffic rules to the controller 40 in response to a request from the controller 40. Note that the map database 30 does not need to be stored in the host vehicle, but the map database 30 may be stored in a server. In the case where the map database 30 is stored in a server, the controller 40 communicates with the server to acquire map information as necessary.

The controller 40 is circuitry to process data acquired from the object detection unit 10, GPS receiver 20, and map database 30 and includes, for example, ICs, LSIs, and other parts. The controller 40 can be separated into an information acquisition unit 41 and a route prediction unit 42 in view of its functionality.

The information acquisition unit 41 acquires data from the object detection unit 10, GPS receiver 20, and map database 30. The information acquisition unit 41 outputs the acquired data to the route prediction unit 42.

The route prediction unit 42 predicts the route on which a target vehicle will travel, based on the data acquired from the information acquisition unit 41. Details of the route prediction unit 42 will be described later. Note that the predicted route of the target vehicle includes the direction, area, traffic lane, and the like in which the target vehicle will travel from this time on and may include anything that is where the target vehicle will travel from this time on.

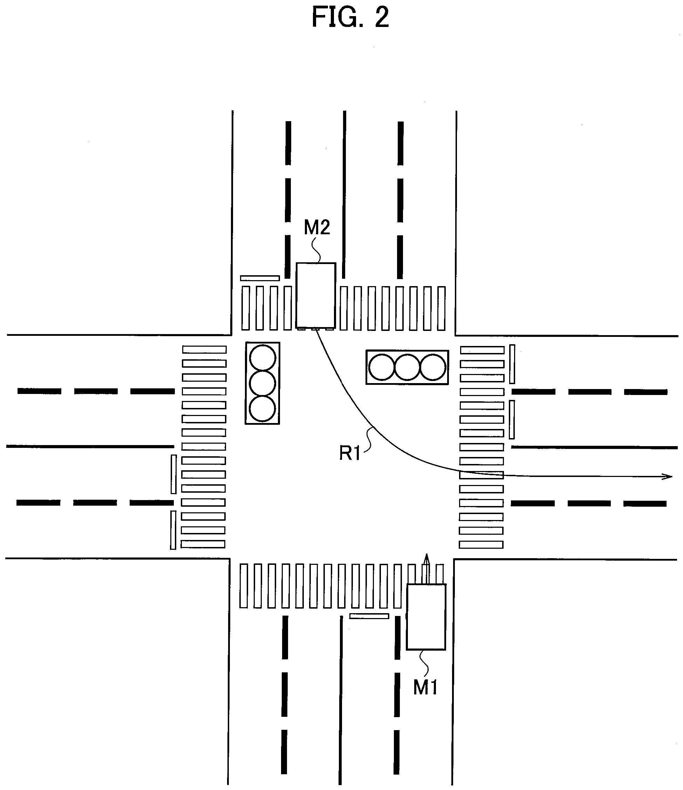

Next, with reference to Fig. 2, description will be provided for an operation example of the vehicle behavior prediction apparatus 1. In a first embodiment, description will be provided for a scene at an intersection as an example of a situation of traveling, as illustrated in Fig. 2.

As illustrated in Fig. 2, when the object detection unit 10 detects target-vehicle M2 around host-vehicle M1, the object detection unit 10 outputs positional information on target-vehicle M2 to the controller 40. Note that the target vehicle is not limited to an automobile or the like but may be a bicycle or motorbike traveling on the road.

When the route prediction unit 42 acquires the positional information on target-vehicle M2, the route prediction unit 42 judges whether the vehicle speed of target-vehicle M2 is a predetermined value or less. The route prediction unit 42 can judge whether the vehicle speed of target-vehicle M2 is the predetermined value (for example, 10 km/h) or less, also from the relative speed and relative position of target-vehicle M2 with respect to host-vehicle M1. If the route prediction unit 42 judges that the vehicle speed of target-vehicle M2 is the predetermined value or less, the route prediction unit 42 refers to the map database 30 using the current position of host-vehicle M1 acquired from the GPS receiver 20 and the relative position of target-vehicle M2 with respect to the host vehicle, and acquires the road structure around the position of target-vehicle M2. As illustrated in Fig. 2, the route prediction unit 42 acquires information that the road structure around the position of target-vehicle M2 is an intersection of two lanes on one side. Meanwhile, the lower the vehicle speed is, the smaller the moving distance is, making it more difficult to calculate the moving direction and acquire the orientation of the target vehicle. Here, instead of judging whether the vehicle speed of target-vehicle M2 is the predetermined value or less, whether target-vehicle M2 is at a standstill may be used for the judgement. This allows the orientation of target-vehicle M2 to be predicted even when target-vehicle M2 is at a standstill, and it is difficult to acquire the orientation of target-vehicle M2.

Next, the route prediction unit 42 refers to the map database 30 to acquire the traffic rules concerning the acquired road structure. Specifically, the route prediction unit 42 acquires the traffic rules concerning the intersection illustrated in Fig. 2. Here, assume that the traffic lane on which target-vehicle M2 is positioned is a left-turn-only lane. In this case, the traffic rules prohibit target-vehicle M2 from going in any direction except turning left. This enables the route prediction unit 42 to judge that the route on which target-vehicle M2 will travel is left-turn-route R1 as an arrow indicates in Fig. 2. As just described, use of the traffic rules when the route prediction unit 42 predicts the route on which target-vehicle M2 will travel improves the accuracy in predicting the route on which target-vehicle M2 will travel. Note that the route prediction unit 42 can judge that the traffic lane on which target-vehicle M2 is positioned is a left-turn-only lane from the road structure acquired from the map database 30.

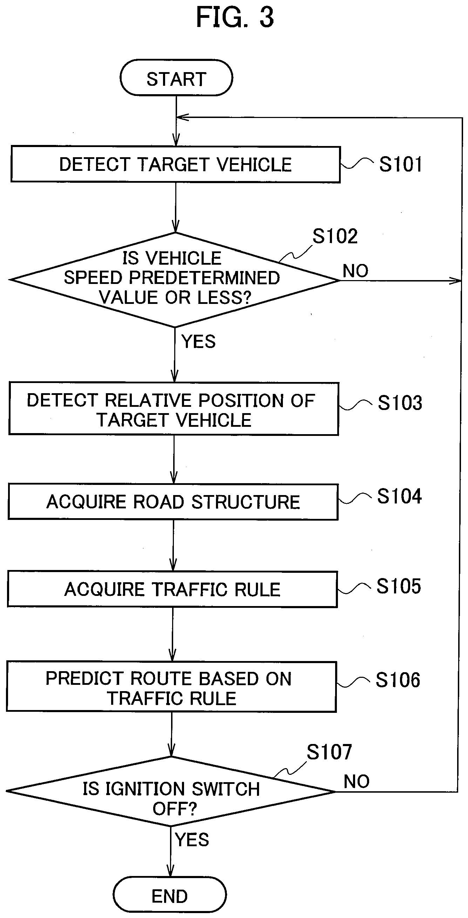

Next, with reference to a flowchart illustrated in Fig. 3, an operation example of the vehicle behavior prediction apparatus 1 will be described. This flowchart starts when the ignition switch is turned on.

At step S101, the object detection unit 10 detects a target vehicle around host-vehicle M1.

At step S102, the route prediction unit 42 judges whether the vehicle speed of target-vehicle M2 detected at step S101 is a predetermined value or less. If the vehicle speed of target-vehicle M2 is the predetermined value or less (Yes at step S102), the process proceeds to step S103. If the vehicle speed of target-vehicle M2 is not the predetermined value or less, the process returns to step S101.

At step S103, the GPS receiver 20 detects the current position of host-vehicle M1 to acquire the road structure at the current position of host-vehicle M1. Then, vehicle behavior prediction apparatus 1 detects the relative position of target-vehicle M2 with respect to host-vehicle M1.

At step S104, the route prediction unit 42 refers to the relative position of target-vehicle M2 with respect to host-vehicle M1 and the map database 30 and acquires the road structure around the position of target-vehicle M2. The road structure is, for example, an intersection. The road structure includes at least information on the traffic lanes, such as the number of traffic lanes and whether there is a left-turn-only lane or a right-turn-only lane.

At step S105, the route prediction unit 42 acquires the traffic rules concerning the road structure. The reason for acquiring the traffic rules is that the route on which target-vehicle M2 will travel can be predicted from the traffic rules in some cases.

At step S106, the route prediction unit 42 predicts the route on which target-vehicle M2 will travel based on the traffic rules applied to the position of target-vehicle M2. In the case where the traffic lane on which target-vehicle M2 is positioned is a left-turn-only lane or right-turn-only lane, the route on which target-vehicle M2 will travel is uniquely determined by the traffic rules, which enables the route prediction unit 42 to predict the route on which target-vehicle M2 will travel.

At step S107, the controller 40 judges whether the ignition switch is off. If the ignition switch is off (Yes at step S107), a series of processes ends. If the ignition switch is not off (No at step S107), the process returns to step S101. Note that in the case where the vehicle behavior prediction apparatus 1 has a function of detecting the vehicle path of target-vehicle M2, and when it detects the vehicle path, the vehicle behavior prediction apparatus 1 may predict the travel route of target-vehicle M2 from the vehicle path. In addition, combining prediction based on the traffic rules and prediction based on the vehicle path when predicting the travel route of a target vehicle improves the prediction accuracy.

As has been described above, the vehicle behavior prediction apparatus 1 according to the first embodiment provides the following operational advantage.

When the vehicle behavior prediction apparatus 1 detects target-vehicle M2 around host-vehicle M1, the vehicle behavior prediction apparatus 1 acquires the position of target-vehicle M2 and the position of host-vehicle M1. The vehicle behavior prediction apparatus 1 refers to the position of target-vehicle M2 and the map database 30 to acquire the road structure at least including the traffic lanes around the position of target-vehicle M2, and then acquires the traffic rules concerning the acquired road structure. Then, the vehicle behavior prediction apparatus 1 predicts the route on which target-vehicle M2 will travel based on the traffic rules. This enables the vehicle behavior prediction apparatus 1 to improve accuracy in predicting the route on which target-vehicle M2 will travel even when it is difficult to detect the orientation and travel histories of target-vehicle M2.

When the vehicle behavior prediction apparatus 1 detects target-vehicle M2 around host-vehicle M1, it detects the vehicle speed of target-vehicle M2 with the object detection unit 10. Then, if the vehicle speed of target-vehicle M2 is a predetermined value or less, the vehicle behavior prediction apparatus 1 predicts the route on which target-vehicle M2 will travel. This operation further improves accuracy of the vehicle behavior prediction apparatus 1 in predicting the route on which target-vehicle M2 will travel when the vehicle speed of target-vehicle M2 is the predetermined value or less, even when it is difficult to detect the orientation and travel histories of target-vehicle M2.

The vehicle behavior prediction apparatus 1 detects the travel path of target-vehicle M2 and predicts the route on which target-vehicle M2 will travel based on the travel path and the traffic rules. This operation makes it possible to predict the route on which target-vehicle M2 will travel by combining prediction based on the travel path with prediction based on the traffic rules, which further improves accuracy in predicting the route on which target-vehicle M2 will travel.

### [Second Embodiment]

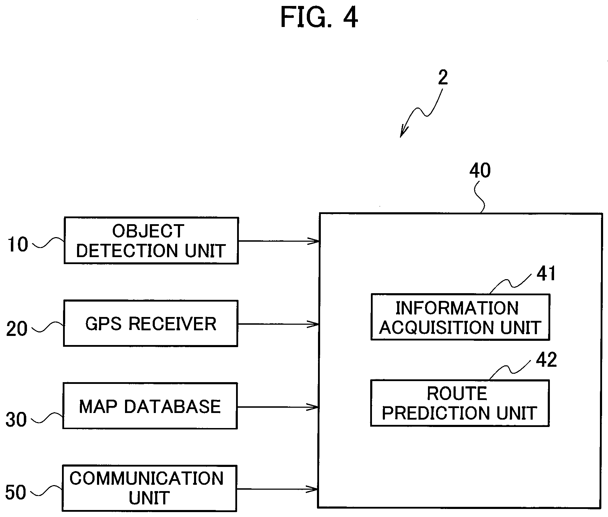

Next, with reference to Fig. 4, description will be provided for a vehicle behavior prediction apparatus 2 according to a second embodiment. As illustrated in Fig. 4, the second embodiment is different from the first embodiment in that the vehicle behavior prediction apparatus 2 includes a communication unit 50. The same constituents as in the first embodiment are denoted by the same reference signs, and description thereof is omitted. Thus, description will be provided mainly for the difference.

The communication unit 50 is a device that perform wireless communication with roadside communication apparatuses disposed on road sides. The roadside communication apparatus transmits infrastructure information to vehicles travelling in the communication area where the apparatus is disposed. The infrastructure information includes, for example, traffic signal information concerning the lighting states of traffic signals. The communication unit 50 outputs the traffic signal information acquired from a roadside communication apparatus to the information acquisition unit 41. Note that the traffic signal information may be acquired using sensors disposed in the vehicle, inter-vehicle communication, and road-vehicle communication.

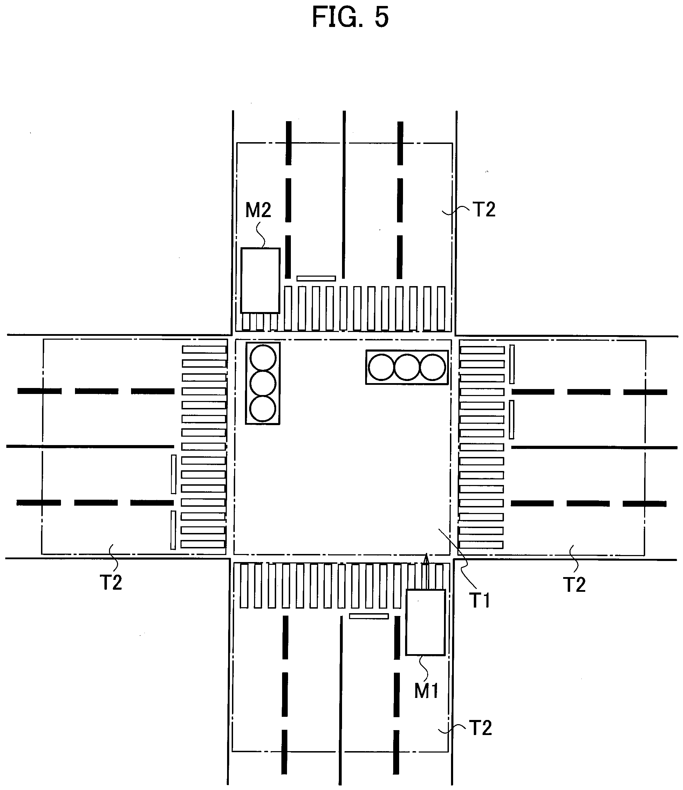

Next, with reference to Figs. 5 to 9, description will be provided for an operation example of the vehicle behavior prediction apparatus 2. Also, in the second embodiment, description will be provided for a scene at an intersection as an example of a situation of traveling as in the first embodiment. In the second embodiment, as illustrated in Fig. 5, the route prediction unit 42 judges whether the position of target-vehicle M2 is inside or outside the intersection. The inside of the intersection means area T1 in which the current traffic lane intersects with the crossing traffic lane as illustrated in Fig. 5. The outside of the intersection means areas T2 around the intersection, excluding area T1, as illustrated in Fig. 5. Note that the definitions of the inside and outside of an intersection are not limited this ones. For example, the inside of an intersection may be defined as an area that is inside the intersection and beyond the stop lines or the crosswalks. Note that in the drawings after Fig. 5, illustration of area T1 and areas T2 is omitted.

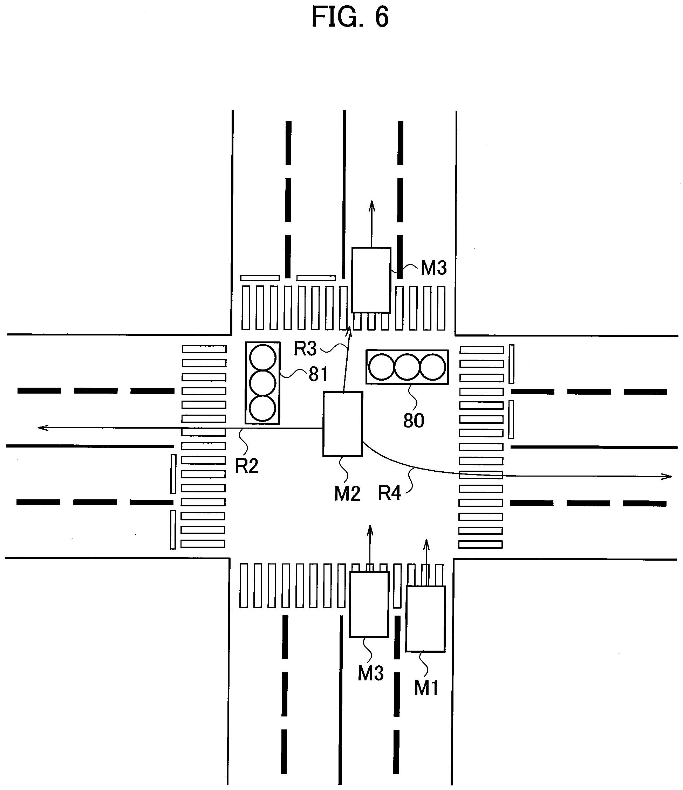

Next, with reference to Fig. 6, description will be provided for a case where target-vehicle M2 is traveling inside an intersection (area T1 illustrated in Fig. 5) at a vehicle speed of a predetermined value or less. As illustrated in Fig. 6, when the object detection unit 10 detects target-vehicle M2 positioned inside the intersection, the route prediction unit 42 extracts multiple route candidates on which target-vehicle M2 may travel based on the position of target-vehicle M2 and the road structure. At this time, the route prediction unit 42 extracts, as candidate routes, routes within a certain distance from target-vehicle M2, for example, within 1 m. From the road structure illustrated in Fig. 6, three routes are extracted as candidate routes. Specifically, the route prediction unit 42 extracts three candidate routes: straight-route R2 which goes straight in a direction intersecting the traveling direction of host-vehicle M1, straight-route R3 which goes straight in the same direction as the traveling direction of host-vehicle M1, and left-turn-route R4 which turns left in a direction intersecting the traveling direction of host-vehicle M1.

Next, the route prediction unit 42 narrows down the three extracted candidate routes using the traffic rules and the traffic conditions. First, the route prediction unit 42 judges whether the amount of traffic on the candidate route is a predetermined amount or more. For example, as illustrated in Fig. 6, in the case where there are other vehicles M3 and M4 traveling on straight-route R3, and thus where the amount of traffic on straight-route R3 is the predetermined amount of more, the possibility that the route on which target-vehicle M2 will travel is straight-route R3 is low. It is because if target-vehicle M2 is taking straight-route R3, the possibility that the vehicle speed becomes low is low, and if so, target-vehicle M2 would impede the traffic flow. Thus, the route prediction unit 42 excludes straight-route R3 from the candidates. Here, that the amount of traffic is the predetermined amount or more means the case where five or more vehicles pass at a point within 30 seconds. Note that although in the present embodiment, a candidate was excluded to predict the travel route, the method is not limited to this one. The route on which target-vehicle M2 will travel may be predicted by calculating the likelihood (possibility) that target-vehicle M2 may travel on each candidate route and adjusting the likelihood. In the case where likelihood is used to predict the route on which target-vehicle M2 will travel, for example, when there are vehicles M3 and M4 traveling on straight-route R3 as illustrated in Fig. 6, and thus when the amount of traffic on straight-route R3 is the predetermined amount of more, the possibility that the route on which target-vehicle M2 will travel is straight-route R3 is low. Thus, the route prediction unit 42 sets low the likelihood of traveling on straight-route R3. Alternatively, the route prediction unit 42 sets high the likelihoods of traveling on the other candidate routes. The route on which target-vehicle M2 will travel may be predicted in this manner.

Next, the route prediction unit 42 narrows down the candidate routes using the traffic signal information acquired from the communication unit 50. When the traffic signal 80 for the traveling direction of host-vehicle M1 is green, and the traffic signal 81 for the direction intersecting the traveling direction of host-vehicle M1 is red, as illustrated in Fig. 6, the possibility that the route on which target-vehicle M2 will travel is straight-route R2 is low. Since the traffic signal 81 is red, the possibility that when target-vehicle M2 is taking straight-route R2, target-vehicle M2 is at standstill around the center of the intersection is low, from the viewpoint of the traffic rules. If the vehicle speed of target-vehicle M2 becomes low because of the traffic signal 81, it is likely that target-vehicle M2 stops in front of the stop line. Thus, the route prediction unit 42 excludes straight-route R2 from the candidates. Now since two candidates of the three candidate routes have been excluded through these processes, the route prediction unit 42 predicts that left-turn-route R4, which is the remaining candidate route, is the route on which target-vehicle M2 will travel.

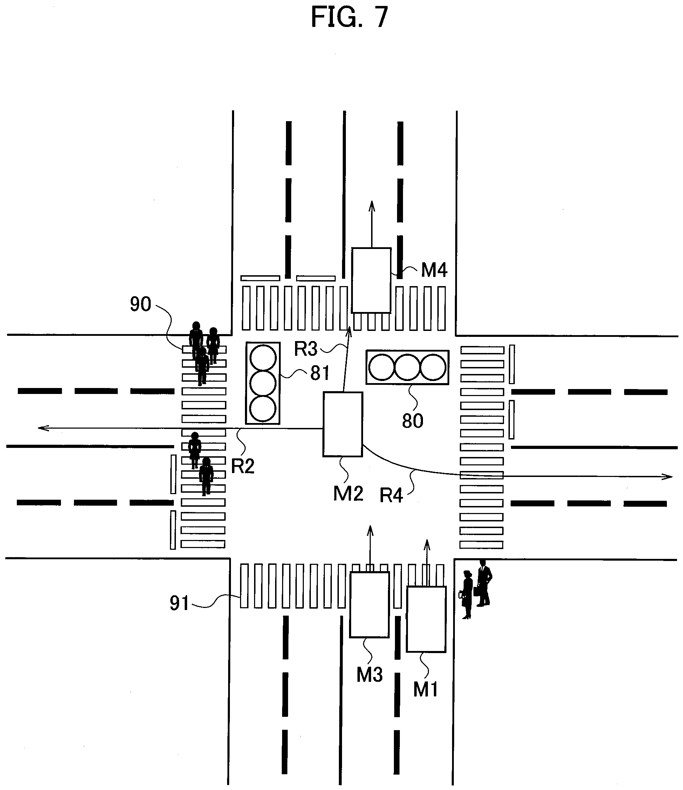

Note that in the case where the route prediction unit 42 cannot acquire the traffic signal information, the route prediction unit 42 may narrow down candidate routes using pedestrian information concerning crosswalks. The pedestrian information concerning crosswalks is information on pedestrians walking on crosswalks and information on pedestrians standing in front of crosswalks. As illustrated in Fig. 7, in the case where pedestrians are walking on the crosswalk 90 located on straight-route R2, and pedestrians are standing in front of the crosswalk 91 located on the route of the traveling direction of host-vehicle M1, the route prediction unit 42 presumes from the movement of the pedestrians that the traffic signal 80 for the traveling direction of host-vehicle M1 is green and that the traffic signal 81 for the direction intersecting the traveling direction of host-vehicle M1 is red. Thus, use of the pedestrian information allows the route prediction unit 42 to presume the traffic signal information even when the route prediction unit 42 cannot acquire the traffic signal information. Then, the route prediction unit 42 can exclude straight-route R2 from the candidate routes using the presumed traffic signal information. The route prediction unit 42 may use the pedestrian information also in the case of acquiring the traffic signal information. In other words, the route prediction unit 42 may narrow down candidate routes using both the traffic signal information and the pedestrian information.

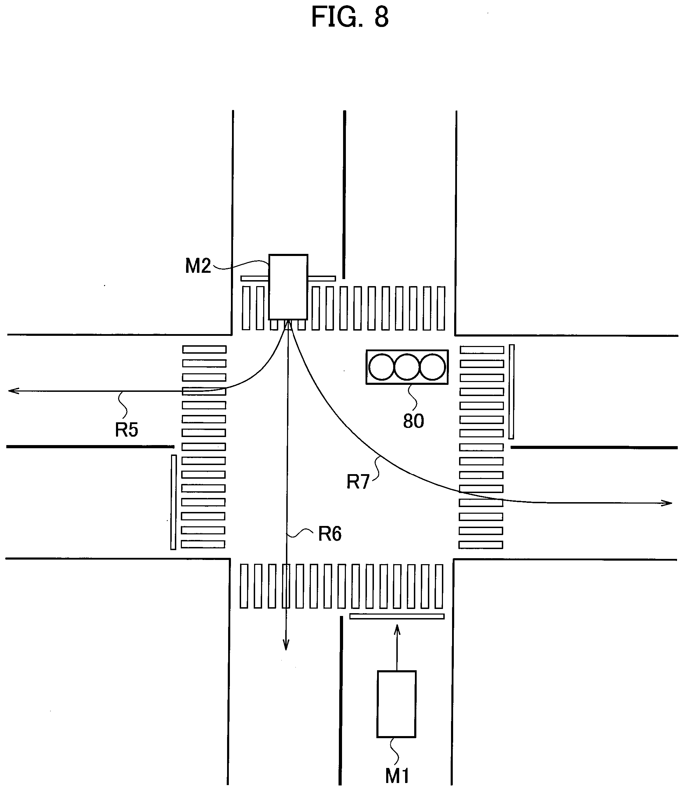

Next, description will be provided with reference to Fig. 8 for the case where target-vehicle M2 is positioned outside an intersection (area T2 illustrated in Fig. 5), and where the vehicle speed is the predetermined value or less. As illustrated in Fig. 8, in the case where the object detection unit 10 detects target-vehicle M2 positioned outside the intersection, the route prediction unit 42 refers to the relative position of target-vehicle M2 with respect to host-vehicle M1 and the map database 30 and acquires the road structure around the position of target-vehicle M2. As illustrated in Fig. 8, the route prediction unit 42 acquires information that the road structure at the position of target-vehicle M2 is an intersection of one lane on one side. Next, the route prediction unit 42 extracts multiple route candidates on which target-vehicle M2 may travel based on the position of target-vehicle M2 and the road structure. From the road structure illustrated in Fig. 8, three routes are extracted as candidate routes. Specifically, the route prediction unit 42 extracts three candidate routes: right-turn-route R5 which turns right in a direction intersecting the traveling direction of host-vehicle M1, straight-route R6 which goes straight in the direction opposite to the traveling direction of host-vehicle M1, and left-turn-route R7 which turns left in a direction intersecting the traveling direction of host-vehicle M1.

Next, the route prediction unit 42 narrows down the three extracted candidate routes using the traffic rules and the traffic conditions. Specifically, the route prediction unit 42, first, narrows down the candidate routes using the traffic conditions around host-vehicle M1 acquired from the object detection unit 10 the traffic signal information. The traffic conditions around host-vehicle M1 acquired from the object detection unit 10 mean, for example, the state of traffic congestion and whether pedestrians are present on the crosswalks. In the case where the traffic signal 80 for the traveling direction of host-vehicle M1 is green and where there is no other vehicle around host-vehicle M1, which means that there is no traffic congestion, as illustrated in Fig. 8, the route prediction unit 42 excludes straight-route R6 from the candidates. It is because with the traffic conditions illustrated in Fig. 8, if target-vehicle M2 wanted to take straight-route R6, it should have already done so. That even so target-vehicle M2 is moving slowly outside the intersection means that the possibility that the route that target-vehicle M2 wants to take is right-turn-route R5 or left-turn-route R7 is high.

Next, the route prediction unit 42 narrows down the candidate routes on which target-vehicle M2 may travel to one of right-turn-route R5 and left-turn-route R7. Here, if the route on which target-vehicle M2 will travel is left-turn-route R7, since there is no traffic congestion around host-vehicle M1 as illustrated in Fig. 8, the possibility that target-vehicle M2 moves into the intersection and slows down at a position where it can turn easily is high. That even so target-vehicle M2 slows down outside the intersection means that the possibility that the route that target-vehicle M2 wants to take is right-turn-route R5 is high. Thus, the route prediction unit 42 excludes left-turn-route R7 from the candidate routes and predicts that right-turn-route R5, which is the remaining candidate, is the route on which target-vehicle M2 will travel.

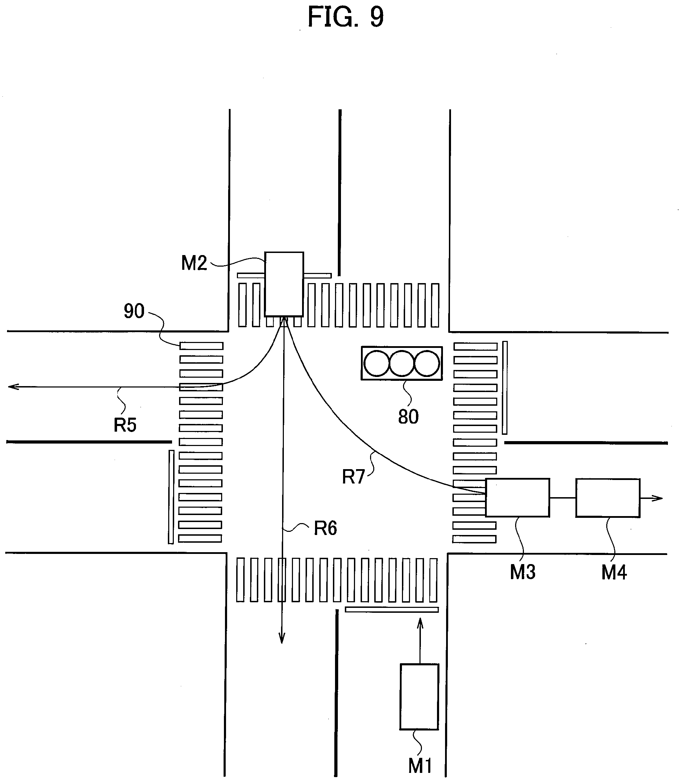

On the other hand, in the case where vehicles M3 and M4 are at standstill (or moving slowly) on left-turn-route R7, and there is no vacant space after vehicle M3, as illustrated in Fig. 9, the route prediction unit 42 judges that traffic congestion has occurred on left-turn-route R7. In the case where there is traffic congestion on left-turn-route R7 as above, and target-vehicle M2 wants to take left-turn-route R7, target-vehicle M2 would usually stop outside the intersection. It is because if target-vehicle M2 moved into the intersection in this situation, and the signal changed before traffic congestion is solved, target-vehicle M2 would impede the traffic in the crossing traffic lane. In other words, in the traffic conditions illustrated in Fig. 9, there are cases where even if the route prediction unit 42 uses the positional information of other vehicles, the route prediction unit 42 cannot predict whether the route on which target-vehicle M2 will travel is right-turn-route R5 or left-turn-route R7.

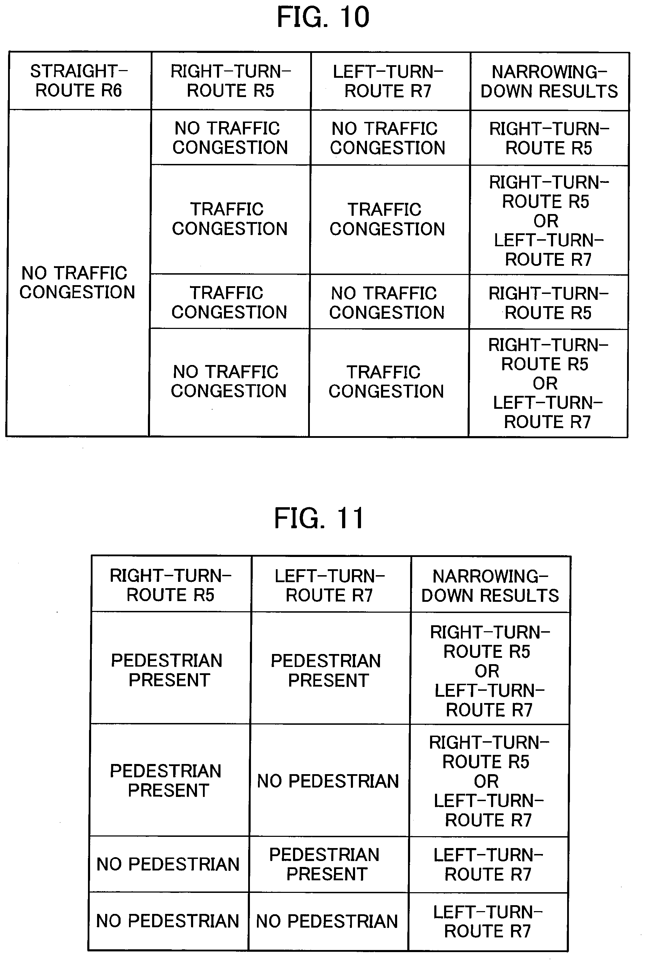

To address this situation, the route prediction unit 42 uses pedestrian information concerning crosswalks to narrows down the candidate routes. In the case where there is no pedestrian on the crosswalk 90 intersecting right-turn-route R5 as illustrated in Fig. 9, the route prediction unit 42 excludes right-turn-route R5 from the candidate routes and predicts that left-turn-route R7 is the route on which target-vehicle M2 will travel. The reason is that since there is no traffic congestion on right-turn-route R5, and in addition, there is no pedestrian on the crosswalk 90 intersecting right-turn-route R5, if target-vehicle M2 wanted to take right-turn-route R5, it should have already done so. That even so target-vehicle M2 is moving slowly outside the intersection means that the route that target-vehicle M2 wants to take is left-turn-route R7. The results of narrowing down the candidate routes using the state of traffic congestion and the pedestrian information as above are shown in Figs. 10 and 11. Fig. 10 shows the results of narrowing down the candidate routes using information whether there is traffic congestion on right-turn-route R5 and left-turn-route R7 in the case where there is no traffic congestion on straight-route R6. Fig. 11 shows the results of narrowing down the candidate routes using the pedestrian information in the case where there is no traffic congestion on right-turn-route R5, and there is traffic congestion on left-turn-route R7, in Fig. 10 (the lowermost case shown in Fig. 10). Note that although in the examples shown in Figs. 10 and 11, the route prediction unit 42 narrows down the candidate routes by judging the state of traffic congestion, and then using the pedestrian information, the method is not limited to this one. The route prediction unit 42 may narrow down candidate routes by using the pedestrian information, and then judging the state of traffic congestion.

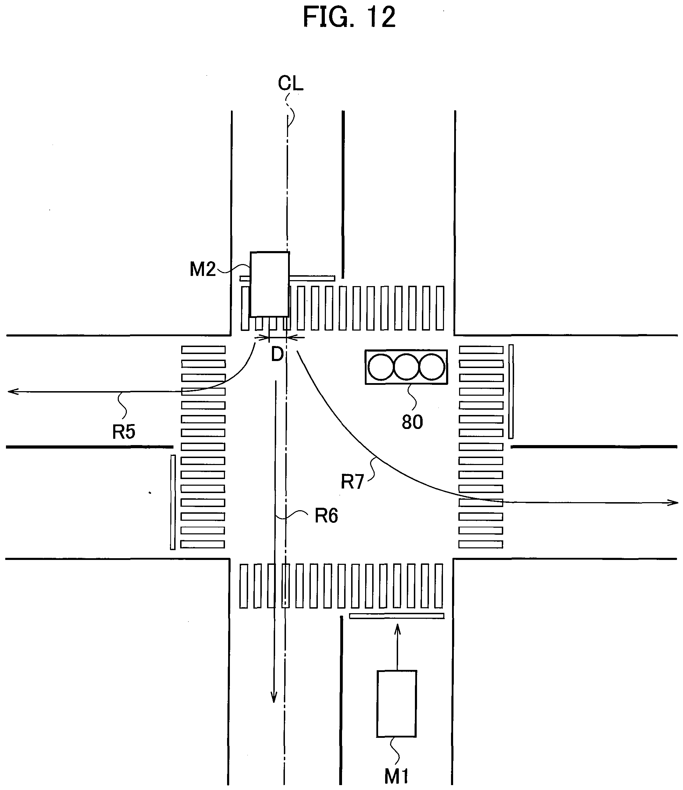

As shown in Figs. 10 and 11, there are cases where even if the state of traffic congestion and the pedestrian information are used, it is impossible to predict whether the route on which target-vehicle M2 will travel is right-turn-route R5 or left-turn-route R7. In these cases, the route prediction unit 42 uses the position of target-vehicle M2 relative to the center-line CL of the traffic lane as illustrated in Fig. 12 to narrows down the candidate routes.

Specifically, as illustrated in Fig. 12, the route prediction unit 42 calculates distance D from center-line CL of the traffic lane where target-vehicle M2 is positioned to the center position of target-vehicle M2. The center position of target-vehicle M2 means the center position of the vehicle width. The route prediction unit 42 calculates distance D using the vehicle width of target-vehicle M2 acquired by the object detection unit 10. Then, the route prediction unit 42 narrows down candidate routes using the calculated distance D. The traffic rules require drivers to move their vehicles close to the right or left edge of the traffic lane when turning right or left. On the other hand, when going straight, a driver generally has his/her vehicle travel on the center line of the traffic lane. Thus, if distance D is a predetermined value (for example, 0.3 m) or less, the route prediction unit 42 predicts that the route on which target-vehicle M2 will travel is straight-route R6. Note that in the case where straight-route R6 has been excluded from the candidate routes due to the traffic conditions or other factors, the route prediction unit 42 cancels the prediction.

In the case where distance D is larger than the predetermined value, and distance D is large on the left side of the center line when viewed from host-vehicle M1, as illustrated in Fig. 12, in other words, in the case where distance D < 0, assuming that center-line CL is the Y coordinate, the route prediction unit 42 predicts that the route on which target-vehicle M2 will travel is right-turn-route R5. In the case where distance D is larger than the predetermined value, and distance D is large on the right side of the center line when viewed from host-vehicle M1, in other words, in the case where distance D > 0, assuming that center-line CL is the Y coordinate, the route prediction unit 42 predicts that the route on which target-vehicle M2 will travel is left-turn-route R7. Thus, even in the case where the route on which target-vehicle M2 will travel cannot be predicted by using the state of traffic congestion and the pedestrian information, use of distance D allows the route prediction unit 42 to predict the route on which target-vehicle M2 will travel.

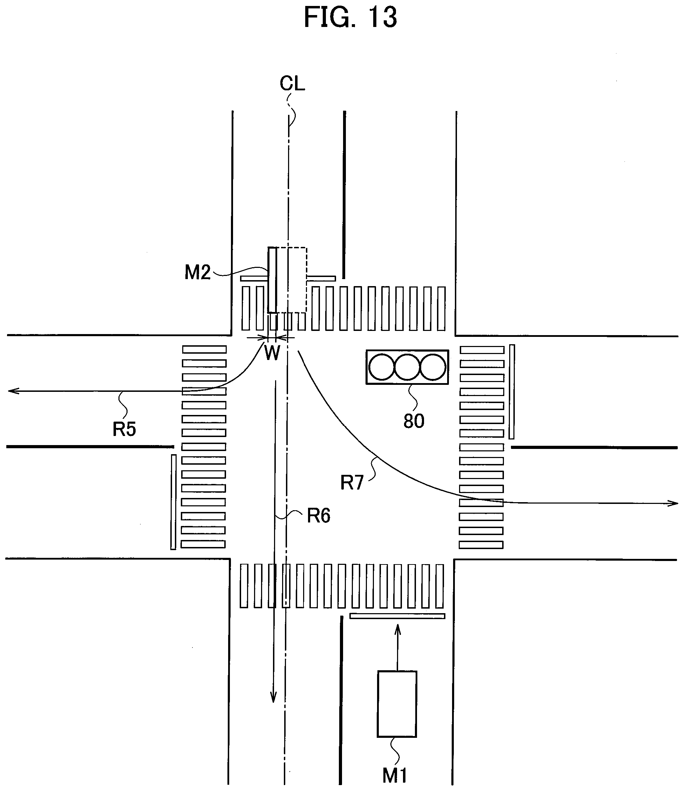

Meanwhile, there are cases where the object detection unit 10 cannot accurately detect the vehicle-width W of target-vehicle M2 for some reasons such as that target-vehicle M2 is hidden by another vehicle, as illustrated in Fig. 13. If the detected vehicle-width W is smaller than a predetermined value (for example, 80% of the vehicle type), the route prediction unit 42 does not perform narrowing-down of candidate routes using distance D. It is because in the case where the detected vehicle-width W is smaller than the predetermined value, it is impossible to judge what part of the entire vehicle width has been detected, and thus there are cases where the position of target-vehicle M2 relative to center-line CL is not accurately calculated.

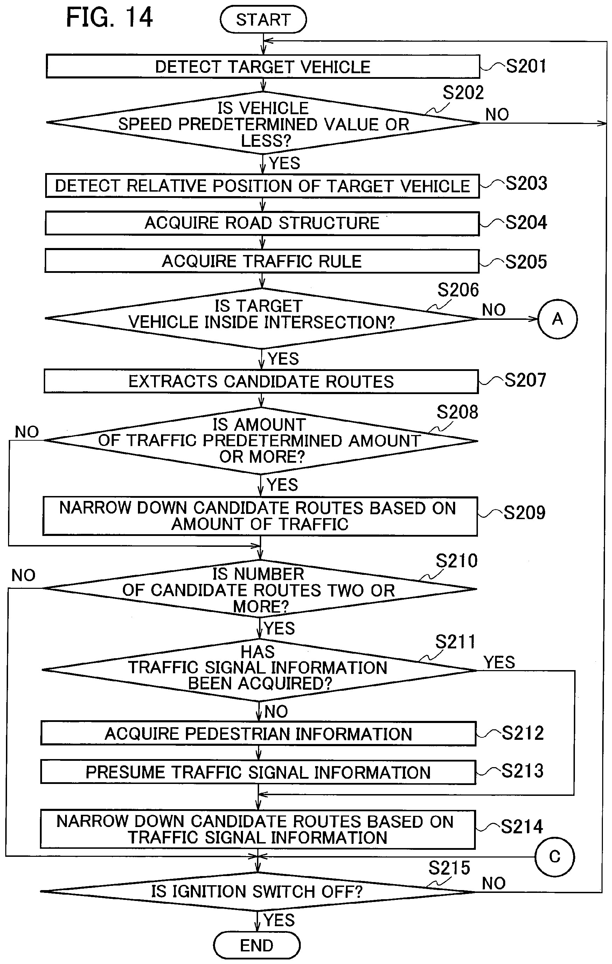

Next, description will be provided with reference to flowcharts shown in Figs. 14 to 16 for an operation example of the vehicle behavior prediction apparatus 2 according to the second embodiment. Note that operations in steps S201 to S205 and in step S215 are the same as those in steps S101 to S105 and in step S107 in Fig. 3, and thus detailed description thereof is omitted.

At step S206, the route prediction unit 42 judges whether target-vehicle M2 is positioned inside the intersection or outside the intersection. It is because there are cases where candidate routes to be extracted are different between the inside and outside of an intersection. If target-vehicle M2 is positioned inside the intersection (Yes at step S206), the process proceeds to step S207. If target-vehicle M2 is positioned outside the intersection (No at step S206), the process proceeds to step S220.

At step S207, the route prediction unit 42 extracts multiple candidate routes on which target-vehicle M2 may travel based on the position of target-vehicle M2 and the road structure. Extracting based on a road structure means extracting the routes on which target-vehicle M2 can travel from the position of target-vehicle M2 based on the road structure.

At step S208, the route prediction unit 42 judges whether the amount of traffic on the candidate route is a predetermined amount or more using information on vehicles M3 and M4 around host-vehicle M1. The information on vehicles M3 and M4 includes their positions, speeds, accelerations, and traveling directions. In general, it is unusual that a vehicle stays at a position on a road where the amount of traffic is a certain amount or more. If it happens, the vehicle would impede the flow of traffic, which is not preferable in terms of the traffic rules. Thus, the route prediction unit 42 can use the amount of traffic and the traffic rules on the candidate route to narrow down candidate routes. If the amount of traffic on the candidate route is a predetermined amount or more (Yes at step S208), the process proceeds to step S209. If the amount of traffic is less than the predetermined amount (No at step S208), the process proceeds to step S210.

At step S209, the route prediction unit 42 narrows down the candidate routes using the traffic rules and the amount of traffic on the candidate routes. In the case where the amount of traffic on straight-route R3 is the predetermined amount or more as illustrated in Fig. 6, the route prediction unit 42 excludes straight-route R3 from the candidates.

At step S210, the route prediction unit 42 judges whether the number of candidate routes is two or more. If the number of candidate routes is one (No at step S210), the route prediction unit 42 predicts that the remaining candidate route is the route on which target-vehicle M2 will travel, and the process proceeds to step S215. If the number of candidate routes is two or more (Yes at step S210), the process proceeds to step S211.

At step S211, the route prediction unit 42 acquires the traffic signal information around host-vehicle M1 to narrow down the candidate routes. If the route prediction unit 42 has acquired the traffic signal information (Yes at step S211), the process proceeds to step S214. If the route prediction unit 42 does not acquire the traffic signal information (No at step S211), the process proceeds to step S212.

At step S212, the route prediction unit 42 acquires pedestrian information concerning the crosswalks. It is because even in the case where the traffic signal information cannot be acquired, use of the pedestrian information allows the route prediction unit 42 to presume traffic signal information.

At step S213, the route prediction unit 42 presumes traffic signal information using the acquired pedestrian information. As illustrated in Fig. 7, in the case where pedestrians are walking on the crosswalk 90 located on straight-route R2, and pedestrians are standing in front of the crosswalk 91 located on the route of the traveling direction of host-vehicle M1, the route prediction unit 42 presumes from the movement of the pedestrians that the traffic signal 80 for the traveling direction of host-vehicle M1 is green and that the traffic signal 81 for the direction intersecting the traveling direction of host-vehicle M1 is red.

At step S214, the route prediction unit 42 narrows down the candidate routes using the traffic signal information acquired at step S211 or the traffic signal information presumed at step S213. Note that the route prediction unit 42 may narrow down the candidate routes using both the traffic signal information acquired at step S211 and the traffic signal information presumed at step S213.

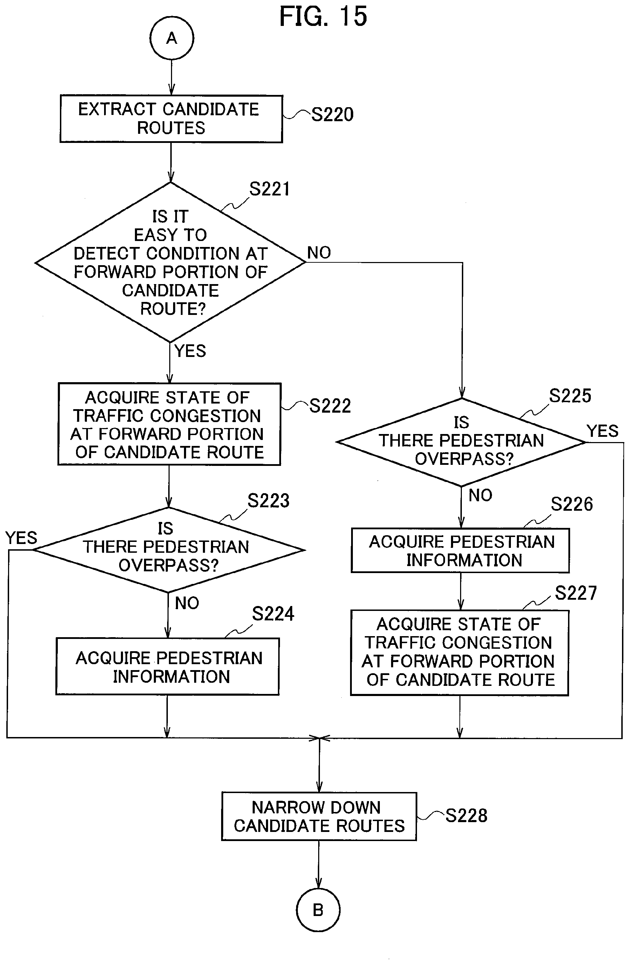

Next, at step S220 shown in Fig. 15, the route prediction unit 42 extracts multiple candidate routes on which target-vehicle M2 may travel based on the position of target-vehicle M2 and the road structure.

At step S221, the object detection unit 10 detects the condition at the forward portion of the candidate route extracted from the route prediction unit 42. The forward portion of a candidate route means the portion ahead of the candidate route. The object detection unit 10 detects the condition at the forward portion of the candidate route within the detectable range, which is affected by other vehicles and buildings around host-vehicle M1. Specifically, the more other vehicles and buildings there are, the more difficult it is for the object detection unit 10 to detect the condition at the forward portion of the candidate route, while the fewer other vehicles and buildings there are, the easier it is for the object detection unit 10 to detect the condition at the forward portion of the candidate route. If it is easy for the object detection unit 10 to detect the condition at the forward portion of the candidate route (Yes at step S221), the process proceeds to step S222. If it is difficult for the object detection unit 10 to detect the condition at the forward portion of the candidate route (No at step S221), the process proceeds to step S225.

At step S222, the route prediction unit 42 acquires the state of traffic congestion at the forward portion of the candidate route based on the information on the forward portion of the candidate route, detected by the object detection unit 10. It is because there are cases where candidate routes can be narrowed down based on the state of traffic congestion.

At step S223, the route prediction unit 42 refers to the map database 30 to detect whether there is a pedestrian overpass around host-vehicle M1. The reason why whether there is a pedestrian overpass is detected is that from the information, it is easy to judge whether the pedestrian information concerning the crosswalks around host-vehicle M1 can be used. Specifically, if there is a pedestrian overpass around host-vehicle M1, the route prediction unit 42 can easily judge that there is no the crosswalk for the intersection. Since pedestrian information for an intersection with no crosswalk does not contribute to narrowing down candidate routes, the route prediction unit 42 does not need to acquire pedestrian information. In the case where the route prediction unit 42 does not acquire pedestrian information, the amount of information to be processed decreases, and it saves the resources. If there is a pedestrian overpass around host-vehicle M1 (Yes at step S223), the process proceeds to step S228. If there is no pedestrian overpass around host-vehicle M1 (No at step S223), the process proceeds to step S224.

At step S224, the route prediction unit 42 acquires pedestrian information concerning the crosswalks. It is because there are cases where use of pedestrian information makes it possible to narrow down candidate routes.

At step S225, since it is difficult for the object detection unit 10 to detect the condition at the forward portion of the candidate route, the route prediction unit 42 acquires information from information easier to acquire. Thus, the route prediction unit 42 refers to the map database 30 to detect whether there is a pedestrian overpass around host-vehicle M1. The reason why whether there is a pedestrian overpass is detected is as described above. If there is a pedestrian overpass around host-vehicle M1 (Yes at step S225), the process proceeds to step S228. If there is no pedestrian overpass around host-vehicle M1 (No at step S225), the process proceeds to step S226.

At step S226, the route prediction unit 42 acquires pedestrian information concerning the crosswalks. It is because there are cases where use of pedestrian information makes it possible to narrow down candidate routes.

At step S227, the object detection unit 10 detects the condition at the forward portion of the candidate route within the detectable range. The route prediction unit 42 acquires the state of traffic congestion at the forward portion of the candidate route based on the information detected by the object detection unit 10. It is because there are cases where candidate routes can be narrowed down based on the state of traffic congestion.

At step S228, the route prediction unit 42 narrows down the candidate routes using the state of traffic congestion at the forward portion of the candidate route and the pedestrian information concerning the crosswalks. Note that the route prediction unit 42 may narrow down the candidate routes using both the state of traffic congestion and the pedestrian information or may narrow down the candidate routes using only one of the state of traffic congestion or the pedestrian information.

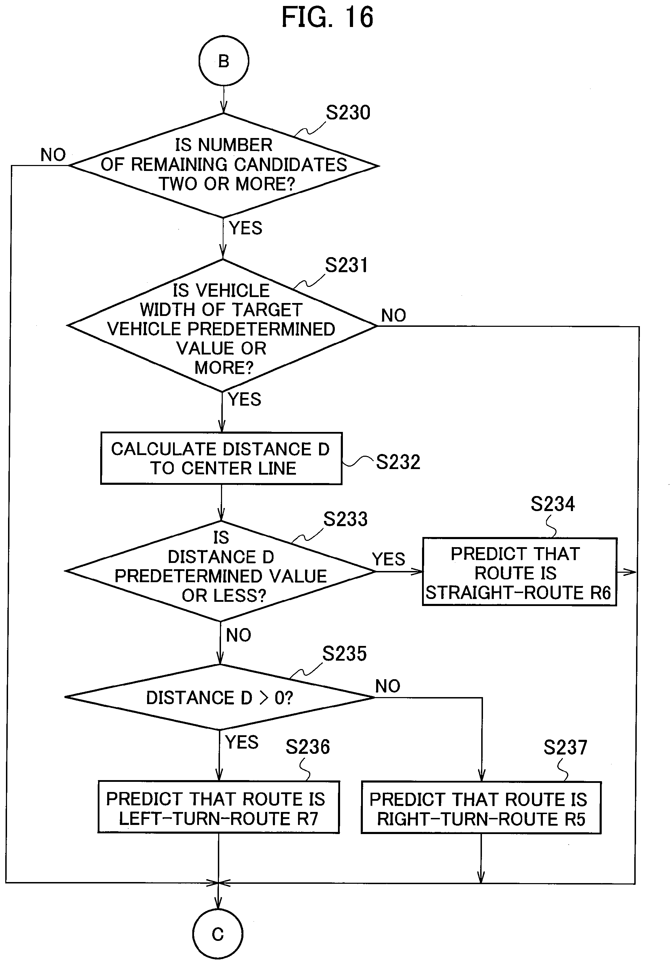

Next, at step S230 shown in Fig. 16, the route prediction unit 42 judges whether the number of candidate routes are two or more. If the number of candidate routes are one (No at step S230), the route prediction unit 42 predicts that the remaining candidate route is the route on which target-vehicle M2 will travel, and the process proceeds to step S215. If the number of candidate routes are two or more (Yes at step S230), the process proceeds to step S231.

At step S231, the object detection unit 10 detects the vehicle-width W of target-vehicle M2 to calculates distance D from center-line CL of the traffic lane on which target-vehicle M2 is positioned to the center position of target-vehicle M2. If the detected vehicle-width W is smaller than the predetermined value, the route prediction unit 42 does not perform narrowing-down of candidate routes using distance D. It is because in the case where the detected vehicle-width W is smaller than the predetermined value, there are cases where it is impossible to judge what part of the entire vehicle width is detected, and thus the position of target-vehicle M2 relative to center-line CL cannot be accurately calculated. If the detected vehicle-width W is the predetermined value or more (Yes at step S231), the process proceeds to step S232. If the detected vehicle-width W is smaller than the predetermined value (No at step S231), the process proceeds to step S215.

At step S232, the route prediction unit 42 calculates distance D from the center-line CL of the traffic lane to the center position of target-vehicle M2 using the vehicle-width W of target-vehicle M2, detected by the object detection unit 10. It is because even in the case where the route on which target-vehicle M2 will travel cannot be predicted by using the state of traffic congestion and the pedestrian information, there are cases where use of distance D allows the route prediction unit 42 to predict the route on which target-vehicle M2 will travel.

At step S233, the route prediction unit 42 judges whether the calculated distance D is the predetermined value or less. This allows the route prediction unit 42 to narrow down the candidate routes. In the case where distance D is the predetermined value or less (Yes at step S233), the process proceeds to step S234. If distance D is larger than the predetermined value (No at step S233), the process proceeds to step S235.

At step S234, the route prediction unit 42 predicts that the route on which target-vehicle M2 will travel is straight-route R6, as illustrated in Fig. 8. Note that the route prediction unit 42 cancels the prediction in the case where straight-route R6 has been excluded from the candidate routes due to the traffic conditions or other reasons.

At step S235, the route prediction unit 42 judges whether distance D is large on the left side or the right side when viewed from host-vehicle M1. Specifically, the route prediction unit 42 judges whether distance D < 0 or distance D > 0, assuming that center-line CL is the Y coordinate. If distance D is large on the right side when viewed from host-vehicle M1, in other words, if distance D > 0 (Yes at step S235), the process proceeds to step S236. If distance D is large on the left side when viewed from host-vehicle M1, in other words, if distance D < 0 (No at step S235), the process proceeds to step S237.

At step S236, the route prediction unit 42 predicts that the route on which target-vehicle M2 will travel is left-turn-route R7. At step S237, the route prediction unit 42 predicts that the route on which target-vehicle M2 will travel is right-turn-route R5.

As has been described above, the vehicle behavior prediction apparatus 2 according to the second embodiment provides the following operational advantage.

The vehicle behavior prediction apparatus 2 extracts multiple route candidates on which target-vehicle M2 may travel based on the position of target-vehicle M2 and the road structure. The vehicle behavior prediction apparatus 2 narrows down the extracted candidate routes using the traffic rules. This improves the accuracy of the vehicle behavior prediction apparatus 2 in predicting the route on which target-vehicle M2 will travel even when it is difficult to detect the orientation and travel histories of target-vehicle M2.

The traffic rules include rules concerning at least one of the traffic signal, crosswalk, or traffic sign. The vehicle behavior prediction apparatus 2 narrows down the candidate routes using traffic rules concerning the colors of the traffic signal. In the case where traffic signal information cannot be acquired, the vehicle behavior prediction apparatus 2 presumes the traffic signal information using pedestrian information concerning the crosswalks to narrow down the candidate routes. The use of rules concerning the traffic signal, the crosswalk, or the traffic sign to narrow down the candidate routes as described above allows the vehicle behavior prediction apparatus 2 to provide improved accuracy in predicting the route on which target-vehicle M2 will travel even when it is difficult to detect the orientation and travel histories of target-vehicle M2.

The vehicle behavior prediction apparatus 2 detects the positions of other vehicles M3 and M4 on the candidate routes other than target-vehicle M2 to judge whether there is traffic congestion at the forward portion of the candidate route. Then, the vehicle behavior prediction apparatus 2 narrows down the candidate routes based on the traffic rules and the state of traffic congestion. This allows the vehicle behavior prediction apparatus 2 to provide improved accuracy in predicting the route on which target-vehicle M2 will travel, even in the case where the orientation and travel histories of target-vehicle M2 cannot be detected.

Although the embodiments of the present invention have been described as described above, it should not be understood that the descriptions and drawings, which are part of this disclosure, limit the invention. From this disclosure, various alternative embodiments, examples and operational techniques will be apparent to those skilled in the art.

For example, although in the second embodiment, the communication unit 50 is used to acquire traffic signal information, the method of acquiring traffic signal information is not limited to this one. For example, a camera may be used to acquire traffic signal information.

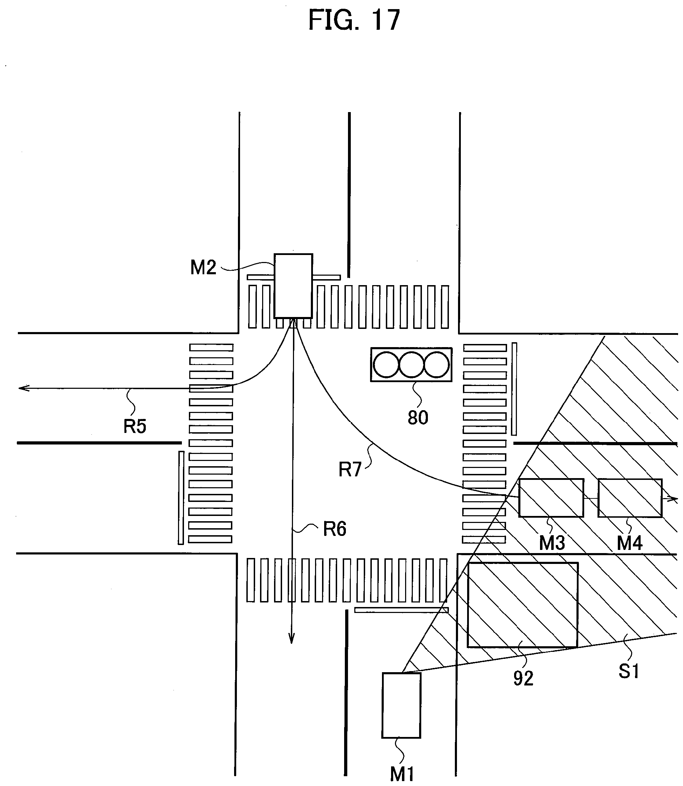

Although also in the second embodiment, the route prediction unit 42 uses the positional information on vehicles M3 and M4 to judges whether there is traffic congestion at the forward portion of the candidate route, there are cases where the object detection unit 10 cannot detect information on area S1 which is hidden by a building 92, as illustrated in Fig. 17. As illustrated in Fig. 17, even though there are vehicles M3 and M4 at a front portion of left-tum-route R7, the object detection unit 10 cannot detect vehicles M3 and M4, so that the route prediction unit 42 cannot judges whether there is traffic congestion at the front portion of left-turn-route R7. In the case where the object detection unit 10 cannot detect the condition at the forward portion of the candidate route as described above, the route prediction unit 42 cancels the prediction of the route on which target-vehicle M2 will travel to avoid making a wrong prediction.

Although description has been provided in the first and second embodiments for right-hand traffic roads, the present invention is applicable to left-hand traffic roads. In addition, the present invention is applicable to vehicles with an automated driving function.

Note that the functions in the above embodiments can be implemented by one or more processing circuits. The processing circuits include programed processing devices such as processing devices with electrical circuits. The processing circuits include devices such as application specific integrated circuits (ASICs) that are arranged to execute functions described in the embodiments and conventional circuit parts.

### REFERENCE SIGNS LIST

- 1, 2: vehicle behavior prediction apparatus
- 10: object detection unit
- 20: GPS receiver
- 30: map database
- 40: controller
- 41: information acquisition unit
- 42: route prediction unit
- 50: communication unit

## Claims

1. A vehicle behavior prediction method of predicting a route on which a target vehicle around a host vehicle will travel, using a sensor to detect the position of the target vehicle, the method comprising:
acquiring road structure around the position of the target vehicle, including at least a traffic lane;
acquiring a traffic rule for the road structure; and
predicting a route on which the target vehicle will travel, based on the traffic rule.

2. The vehicle behavior prediction method according to claim 1, wherein
the traffic rule includes a rule concerning at least one of a traffic signal, a crosswalk, and a traffic sign.

3. The vehicle behavior prediction method according to claim 1 or 2, comprising
extracting multiple candidate routes on which the target vehicle may travel, based on the road structure, wherein
the route on which the target vehicle will travel is predicted out of the multiple candidate routes based on the traffic rule.

4. The vehicle behavior prediction method according to claim 3, comprising
detecting the position of a vehicle on the multiple candidate routes other than the target vehicle, wherein
the route on which the target vehicle will travel is predicted out of the multiple candidate routes based on the position of the vehicle other than the target vehicle and the traffic rule.

5. The vehicle behavior prediction method according to claim 3 or 4, wherein
in a case where condition at forward portions of the multiple candidate routes cannot be detected, the predicting the route on which the target vehicle will travel is cancelled.

6. The vehicle behavior prediction method according to any one of claims 1 to 5, comprising
detecting the vehicle speed of the target vehicle, wherein
in a case where the vehicle speed of the target vehicle is a predetermined value or less, the route on which the target vehicle will travel is predicted.

7. The vehicle behavior prediction method according to any one of claims 1 to 6, comprising
detecting a travel path of the target vehicle, wherein
the route on which the target vehicle will travel is predicted based on the travel path and the traffic rule.

8. A vehicle behavior prediction apparatus comprising:
a sensor that detects the position of a target vehicle around a host vehicle; and
a controller that acquires road structure around the position of the target vehicle including at least a traffic lane, wherein
the controller acquires a traffic rule for the road structure and predicts a route on which the target vehicle will travel, based on the acquired traffic rule.
